# EUROPÄISCHE PATENTSCHRIFT

(11) **EP 2 616 565 B1**
(45) Veröffentlichungstag und Bekanntmachung des Hinweises auf die Patenterteilung: **03.12.2014**
(21) Anmeldenummer: 11755009.5
(22) Anmeldetag: 30.08.2011
(51) Int. Cl.: C22C 38/00, C22C 38/04, C22C 38/26, F02F 3/00, F02F 3/02, C22C 38/06, C22C 38/18, C22C 38/34, C22C 38/46, F16J 1/01

(54) **STAHLKOLBEN FÜR VERBRENNUNGSMOTOREN**
STEEL PISTON FOR INTERNAL COMBUSTION ENGINES
PISTON EN ACIER POUR MOTEURS À COMBUSTION INTERNE

(30) Priorität: 13.09.2010 DE 102010045221
(43) Veröffentlichungstag der Anmeldung: 24.07.2013
(73) Patentinhaber: Daimler AG, 70327 Stuttgart (DE)
(72) Erfinder: KAISER, Timotheus, 70178 Stuttgart (DE); PFEIFER, Hermann, 73457 Essingen (DE); REHM, Wolfgang, 89077 Ulm (DE); WEISSKOPF, Karl, 73635 Rudersberg (DE)
(74) Vertreter: JENSEN & SON
(86) Internationale Anmeldenummer: PCT/EP2011/004362
(87) Internationale Veröffentlichungsnummer: WO 2012/034647

(56) Entgegenhaltungen:
- EP-A1- 1 580 288
- WO-A1-2006/048153
- DE-A1- 4 411 059

## Beschreibung

Die Erfindung betrifft einen Halbzeug-Rohling, der zur Herstellung eines Stahlkolbens für Verbrennungsmotoren mit Zylinderkurbelgehäusen aus Leichtmetalllegierungen geeignet ist. Ferner betrifft die Erfindung einen Stahlkolben selbst für derartige Verbrennungsmotoren.

Im Zuge der Leichtbauweise werden heutzutage für Verbrennungsmotorkomponenten wie Zylinderkurbelgehäuse häufig Leichtmetalllegierungen, insbesondere Aluminiumlegierungen eingesetzt. Durch die Tendenz, aus möglichst kleinen Motoren, möglichst viel Leistung herauszuholen, werden zunehmend höhere Anforderungen an möglichst hohe Spitzendrücke in Hubkolbenmotoren gestellt, die bei bis zu 250 bar liegen können, so dass Kolben aus Leichtmetalllegierungen, beziehungsweise Aluminium nicht mehr geeignet sind. Aus diesem Grund gewinnen Stahlkolben insbesondere bei Dieselmotoren wieder zunehmend Bedeutung. Allerdings birgt die Werkstoffkombination aus Leichtmetallkurbelgehäuse und Stahlkolben das Problem der verschiedenen Wärmeausdehnungskoeffizienten. Der Kolbenschaft oder auch das Kolbenhemd genannt, sorgt für die Führung des Kolbens im Zylinder, wozu ausreichend Spiel zum Zylinder vorhanden sein muss. Durch enge Führung bei ausreichender Schaftlänge, kann das Kolbenkippen beim Anlagewechsel des Kolbens zwischen gegenüberliegenden Zylinderwänden minimiert werden und damit auch eine Hauptursache der Geräuschentwicklung im Motorengeräusch.

Die DE 199 53 311 A1 beschreibt einen Kolbenring, der einer Wärmeausdehnung eines Zylinders aus einer Aluminiumlegierung wirksam folgen soll. Zu diesem Zweck wird der Kolbenring aus einem austenitischen Stahl mit einem Wärmeausdehnungskoeffizienten von mehr als 15 x 10⁻⁶ pro °C hergestellt. Der zum Aufbau des Kolbenrings verwendete austenitische Stahl enthält Nickel in einer Menge zwischen 3,5 und 17 Gew.-% und Chrom in einer Menge zwischen 15 und 20 Gew.-%.

Ein Verfahren zur Herstellung eines Kolbens einer Brennkraftmaschine, um eine Bewehrung in der Brennraummulde des Kolbens zu bilden, ist in der DE 10 2005 034 306 offenbart. Dort wird der Kolben aus zwei Rohlingen, insbesondere durch Reibschweißen zusammengefügt, von denen einer aus einem hoch temperaturfesten Stahl, beispielsweise austenitischen Chrom-Nickel-Stählen besteht, um die Bewehrung der Brennraummulde zu bilden. Dazu wird ein aus den beiden Rohlingen gebildeter Kolbenrohling einem Umformvorgang im Bereich der Fügestelle zwischen den beiden Rohlingen zur Bildung der Brennraummulde unterzogen.

Aus der DE 10 2006 030 699 A1 ist ein gegossener Stahlkolben für Verbrennungsmotoren aus Kolbenoberteil mit Verbrennungsmulde und Ringwand sowie Kolbenunterteil mit Pleuellager bekannt, der einstückig und materialeinheitlich in einem Niederdruckgussverfahren aus einer dichtereduzierten Stahllegierung oder einer Edelstahllegierung gegossen ist. Dazu werden mechanisch hoch belastbare, kostengünstig zu formende und leichtgewichtige Stähle herangezogen. Eine dazu verwendete Edelstahllegierung weist folgende Zusammensetzung auf: 3 bis 9 Gew.-% Mangan, 0,3 bis 1 Gew.-% Silizium, 0,01 bis 0,03 Gew.-% Kohlenstoff, 15 bis 27 Gew.-% Chrom, 1 bis 3 Gew.-% Nickel, 0,2 bis 1 Gew.-% Kupfer, 0,05 bis 0,17 Gew.-% Stickstoff und als Rest Eisen sowie darin enthaltene unvermeidliche Stahlbegleitelemente. Dieser Kolben soll den zunehmend hohen Spitzendrücken Stand halten.

Ein gattungsgemäßer Stahlkolben ist aus der WO 2006/048153 A1 bekannt.

Ausgehend von diesem Stand der Technik ist es wünschenswert, Bauteile zu schaffen, die zur Fertigung von optimierten Stahlkolben, die den Anforderungen an die hohen Spitzendrücke genügen, geeignet sind.

Diese Aufgabe wird durch Halbzeuge mit den Merkmalen des Anspruchs 1 gelöst.

Ferner ergibt sich die Aufgabe der Schaffung von Stahlkolben selbst, die verbesserte Materialeigenschaften im Hinblick auf hohe Spitzendrücke als auch auf die Wärmeausdehnung eines umgebenden Zylinderkurbelgehäuses aus einem Leichtmetallwerkstoff wie Aluminium aufweisen.

Der Stahlkolben mit den Merkmalen des Anspruchs 4 löst diese Aufgabe.

Weiterbildungen sind in den Unteransprüchen ausgeführt.

Ein Halbzeug-Rohling ist zur Herstellung eines Stahlkolbens für Verbrennungsmotoren mit Zylinderkurbelgehäusen aus Leichtmetalllegierungen, die hohe Ausdehnungskoeffizienten aufweisen, geeignet. Ein solcher Stahlkolben hat üblicherweise ein Kolbenoberteil und ein Kolbenunterteil, wobei das Oberteil mit einer Verbrennungsmulde und einer Ringwand ausgestattet ist und das -unterteil mit einem Kolbenschaft und einem Pleuellager ausgestattet ist. Der Halbzeug-Rohling kann das Kolbenoberteil und/oder das Kolbenunterteil bilden und ist erfindungsgemäß, um dem Ausdehnungskoeffizient des Leichtmetalls, etwa Aluminium, nahe zu kommen, aus einem mit Ni, Mn und N stabilisierten austenitischen Stahl beschaffen, der einen thermischen Ausdehnungskoeffizient in einem Bereich von 16 bis 21 x 10⁻⁶ K⁻¹ aufweist.

Ein solcher Halbzeug-Rohling kann, wenn er etwa als Kolbenoberteil gefertigt ist, mit einem weiteren Halbzeug-Rohling der erfindungsgemäßen Art, der als Kolbenunterteil gestaltet ist, zu einem mehrteiligen Stahlkolben mit Kolbenoberteil und Kolbenunterteil gefügt werden.

Das Fügen kann mittels Reibschweißen, Laserschweißen oder Induktionsschweißen geschehen.

Ein erfindungsgemäßer Stahlkolben für Verbrennungsmotoren mit Zylinderkurbelgehäusen aus Leichtmetalllegierungen verfolgt ebenfalls den Gedanken, die Zylinderkomponenten dem Ausdehnungskoeffizienten des Leichtmetalls anzupassen. Dabei ist wenigstens der Kolbenschaft des Stahlkolbens, der zumindest ein Kolbenoberteil mit einer Verbrennungsmulde und einer Ringwand, sowie ein Kolbenunterteil mit dem Kolbenschaft und einem Pleuellager umfasst, aus einem mit Ni, Mn und N stabilisierten austenitischen Stahl beschaffen. Dessen Zusammensetzung ist so gewählt, dass sie in einem Stahl mit einem thermischen Ausdehnungskoeffizient in einem Bereich von 16 bis 21 x 10⁻⁶ K⁻¹ resultiert.

Erfindungsgemäß ist der austenitische Stahl ein Fe-Cr-Ni-Austenit mit einer Zusammensetzung die 0,2 bis 0,4 Gew.-% C, 8 bis 18 Gew.-% Ni, 15 bis 26 Gew.-% Cr, 0,5 bis 2 Gew.-% Si, bis zu 12 Gew.-% Mn, bis zu 2 Gew.-% W, bis zu 2 Gew.-% Nb, bis zu 2 Gew.-% Al, 0,05 bis 0,3 Gew.-% N und Fe mit einem Anteil, der einem Differenzanteil zum Erhalt von 100 Gew.-% der Stahllegierung entspricht, enthält.

Der Stahlkolben kann einteilig aus dem austenitischen Stahl hergestellt sein, etwa durch Schmieden aus einem Halbzeug-Rohling wie dem erfindungsgemäßen, oder er kann mittels eines Schwerkraft- oder Niederdruckgussverfahrens gegossen sein.

Er kann jedoch auch mehrteilig aufgebaut sein, wobei vorteilhaft wenigstens das Kolbenoberteil aus einem verschleißfesten legierten Vergütungsstahl besteht, insbesondere aus einem Stahl aus der Gruppe umfassend MoCr4-, 42CrMo4-, CrMo4-, 31CrMoV6- oder 25MoCr4-Stähle.

Für die Fertigung aus mehreren Teilen kann der Stahlkolben aus zwei Halbzeug-Rohlingen gefügt sein. Einer der Halbzeug-Rohlinge ist in diesem Fall als das Kolbenoberteil und der zweite Halbzeug-Rohling als Kolbenschaft des Kolbenunterteils oder als Kolbenunterteil an sich geformt.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine Seitenansicht eines Kolbens für einen Benzinmotor,
- Fig. 2: eine Querschnittseitenansicht eines Dieselmotorkolbens,
- Fig. 3: ein Diagramm, in dem Ausdehnungskoeffizienten über die Temperatur für Aluminium, Austenite und Ferrite ausgetragen sind.

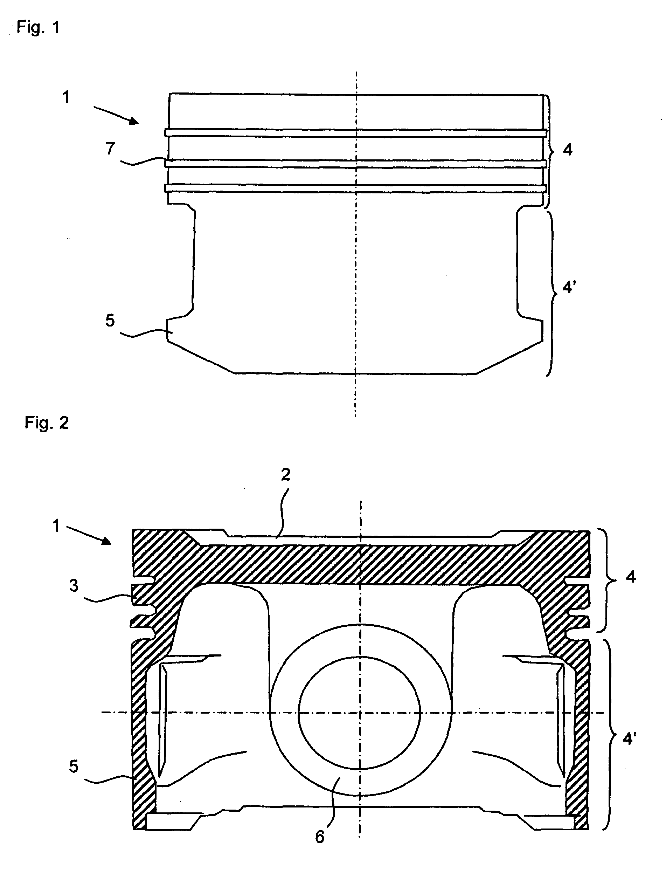

Fig. 1 und 2 stellen Beispiele für Stahlkolben 1 dar, wie sie erfindungsgemäß aus austenitischem Stahl ausgeführt sind.

Der in Fig. 2 gezeigte Dieselkolben ist ein sogenannter Glattschaftkolben, bei dem ein geschlossener, nur im Bereich einer Bolzenbohrung durchbrochener Schaft 5 im Kolbenunterteil 4 bevorzugt wird. In Fig. 2 ist auch das Pleuellager 6 zu sehen.

Die Ausführungen der Kolbenschäfte für Ottomotoren sind komplexer und figurativ nicht dargestellt.

Aus Gewichtsgründen und wegen höherer Drehzahlen sind die Kolbenschaftflächen 5, wie in Fig. 1 zu sehen, verhältnismäßig schmal. Der in Fig. 1 dargestellte Kastenkolben oder Fensterkolben stellt eine typische Bauform dar; auch asymmetrische Kolben mit unterschiedlich breiten Laufflächen werden verwendet.

Dem Kolbenschaft 5 des in Fig. 1 und 2 gezeigten Kolbens, der den das Kolbenunterteil 4 mehr oder weniger umhüllenden Abschnitt darstellt, fällt die Aufgabe der Geradführung des Kolbens 1 im Zylinder zu. Dazu muss das Spiel zwischen Kolbenschaft 5 und Zylinderschaft ausreichend sein.

Dies ist insbesondere dann kritisch, wenn als Zylinderkurbelgehäuse eine Leichtmetalllegierung, wie eine Aluminiumlegierung verwendet wird, die sich durch einen deutlich höheren Wärmeausdehnungskoeffizienten kennzeichnet, als ihn übliche Stähle aufweisen. Um bei Betriebstemperaturen von bis zu 600 °C Probleme der Kolbenführung auf Grund verschiedener thermischer Ausdehnung zu vermeiden, was sich etwa durch Geräuschbildung wie Klappern auf Grund des Kolbenschlags bemerkt macht, wird der erfindungsgemäße Kolben 1, beziehungsweise zumindest dessen Kolbenschaft 5, aus einem mit Nickel Ni, Mangan Mn und Stickstoff N stabilisierten austenitischen Stahl gebildet, dessen thermischer Ausdehnungskoeffizient in einem Bereich von 16 bis 21 x 10⁻⁶ K⁻¹ liegt. Durch diesen hohen Wärmeausdehnungskoeffizienten wird auch bei Betriebstemperatur die enge Führung im Zylinder gewährleistet, so dass eine Geräuschentwicklung in Folge Kolbenkippens beim Anlagewechsel des Kolbens verhindert wird. Da das Kolbengeräusch eine der Hauptursachen für die Geräuschentwicklung des Kurbeltriebs im Verbrennungsmotor ist, und das in erster Linie durch die Kolbenseitenkräfte, den sogenannten Kolbenschlag angeregt wird, ist die erfindungsgemäße Gestaltung von zumindest dem Kolbenschaft aus dem austenitischen Stahl mit dem Wärmeausdehnungskoeffizienten eine wirksame Maßnahme zur akustischen Gestaltung des Motorgeräusches und zur Verringerung des Kolbenkippens.

Der erfindungsgemäß verwendete austenitische Stahl besteht aus 0,2 bis 0,4 Gew.-% Kohlenstoff, 8 bis 18 Gew.-% Nickel, 15 bis 26 Gew.-% Chrom, 0,5 bis 2 Gew.-% Silizium, bis 12 Gew.-% Mangan, bis 2 Gew.-% Wolfram, bis 2 Gew.-% Niob, bis 2 Gew.-% Aluminium und 0,05 bis 0,3 Gew.-% Stickstoff sowie dem Rest Eisen mit den stahltypischen Begleitelementen.

Dieser austenitische Stahl hat mit den Wärmeausdehnungskoeffizienten von 16 bis 21 x 10⁻⁶ K⁻¹ einen deutlich über dem des Ferrits und dem des austenitischen Gusseisens liegenden. Auf Grund dieser Wärmeausdehnung eignet sich dieser Austenit insbesondere zum Einsatz als Kolbenschaftmaterial für Kolben in Aluminiumzylinderlaufbahnen. Der Kolbenschaft kann dabei bereits als Halbzeug-Rohling zur Fertigung des Kolbens vorgefertigt werden; ebenso auch das Kolbenoberteil.

Durch die dem Aluminium angepasste Ausdehnung übernimmt der Kolbenschaft die Führung, während er gleichzeitig eine wesentlich gesteigerte Festigkeit und verbesserte Korrosionseigenschaften im Vergleich zu Aluminiumlegierungen und austenitischem Gusseisen aufweist. Dabei bleibt die Führung in der Zylinderlaufbahn im gesamten Betriebstemperaturbereich stabil, Geräuschentwicklung sowie Festfressen des Kolbens werden verhindert.

Die in Fig. 1 zu sehenden Kolbenringe 7, die in den dafür vorgesehenen Ausnehmungen an der Ringwand 3 des Kolbenoberteils 1 vorliegen, werden ausschließlich durch ihre Vorspannung an die Zylinderlaufbahn gepresst und übernehmen die Aufgabe der Abdichtung. Die Kolbenringe 7 können aus anderem Material bestehen. In dem erfindungsgemäß zur Bildung des Kolbenhemds 5 verwendeten Austenit sorgen die Legierungselemente Silizium, Nickel, Mangan, Chrom für die Hemmung der Austenitumwandlung in Ferrit und Perlit und für die Umwandlung in Martensit bereits bei geringeren Abkühlgeschwindigkeiten. Die Austenitstabilisierung erfolgt durch die im Austenit in größeren Mengen als im Ferrit lösbaren Elemente Nickel, Mangan, Stickstoff und Kohlenstoff, indem der Existenzbereich der Austenitphase vergrößert wird.

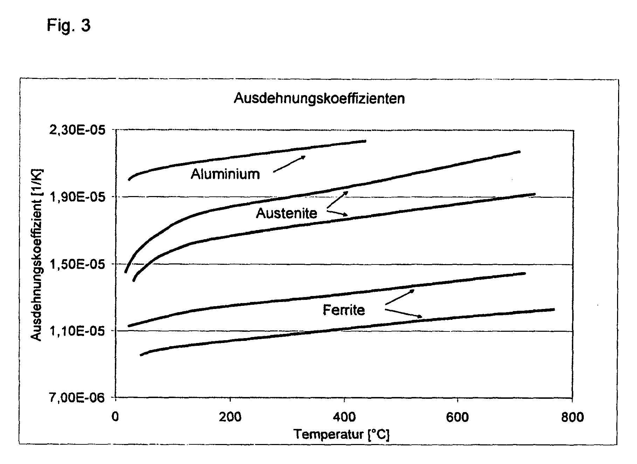

In Fig. 3 sind die Ausdehnungskoeffizienten von Aluminium, verschiedenen Austeniten und Ferriten über die Temperatur aufgetragen. Zu sehen ist, dass gewisse Austenite vor allem bei höheren Temperaturen nahe kommen. Bei dem erfindungemäß beanspruchten thermischen Ausdehnungskoeffizienten in einem Bereich von 16 bis 21 x 10⁻⁶ K⁻¹ ist der Wärmeausdehnungskoeffizient bei 20 °C beziehungsweise bei Raumtemperatur zu verstehen. Im Vergleich mit Fig. 3 wird deutlich, dass dieser Wärmeausdehnungskoeffizient dem des Aluminiums nahe kommt.

Neben den hohen Wärmeausdehnungskoeffizienten wird durch die erfindungsgemäße austenitische Stahllegierung eine hohe Zugfestigkeit und Bruchdehnung bereitgestellt, so dass der Kolbenschaft Seitenkräfte aufnehmen kann, ohne sich zu verformen oder anzureißen, und sich zudem elastisch den Verformungen des Zylinders anpassen kann. Dazu können die Zugfestigkeit oberhalb 500 Newton/mm² und die Bruchdehnung oberhalb 35 % liegen.

Der erfindungsgemäße Kolben kann dabei einstückig aus der austenitischen Stahllegierung gefertigt sein, wobei sich Herstellungsverfahren wie Gießverfahren besonders eignen. So kann ein Niederdruckgussverfahren oder Schwerkraftgussverfahren angewendet werden. Hierbei lässt sich durch ein geeignetes Kernverfahren auch der Kühlkanal eingießen.

Andererseits kann der Kolben auch mehrteilig aufgebaut sein, wobei Kolbenoberteil und Kolbenunterteil aus derselben oder auch aus unterschiedlichen Stahllegierungen, allerdings beide mit hohem Wärmeausdehnungskoeffizienten, aufgebaut sein können. So kann beispielsweise das Kolbenoberteil mit den Ringnuten in der Ringwand und der Verbrennungsmulde geschmiedet werden, was insbesondere bei einem Kolbenoberteil mit Kühlkanal kostengünstiger als durch Gießen ist. Generell kann aber auch das Kolbenunterteil geschmiedet sein.

Geeignete Halbzeug-Rohlinge, die entsprechend as Kolbenober- und Unterteil vorgeformt sind, können zu einem erfindungsgemäßen Stahlkolben gefügt werden. Um die beiden Teile zu verbinden, kommen insbesondere Schweißverfahren wie Induktionsschweißen, Reibschweißen oder Laserschweißen in Frage.

Wenn das für die exakte Führung notwendige Kolbenunterteil, insbesondere der Kolbenschaft durch den erfindungsgemäßen austenitischen Stahl gebildet ist, kann das Kolbenoberteil jedoch auch durch ein Material gebildet werden, an das weniger hohe Ansprüche gestellt werden. So kann für das Kolbenoberteil ein verschleißfester legierter Vergütungsstahl gewählt werden, der im Vergleich zu dem erfindungsgemäßen austenitischen Stahl, der eine vergleichsweise geringe Wärmeleitfähigkeit aufweist, eine höhere Wärmeleitfähigkeit haben kann. Geeignete Stähle für das Kolbenoberteil sind aus der Gruppe ausgewählt, die MoCr4-, 42CrMo4-, CrMo4-, 31CrMoV6- oder 25MoCr4-Stähle umfasst.

Während ein einteilig aus dem austenitischen Stahl gefertigter Kolben in Schwerkraft- oder Niederdruckguss hergestellt werden kann, bestehen mögliche Herstellungsvarianten für mehrteilige Kolben etwa in der Herstellung des Kolbenoberteils aus einem Schmiedestahl durch Schmiedetechnik, wobei die erforderlichen mechanischen und thermischen Eigenschaften im Bereich der Verbrennungsmulde sichergestellt werden. Das Kolbenunterteil mit dem Kolbenhemd und Pleuellager wird aus dem erfindungsgemäßen austenitischen Stahl mit einem Wärmeausdehnungskoeffizienten von 16 bis 21 x 10⁻⁶ pro Kelvin durch Gießen, vorzugsweise im Niederdruckguss, hergestellt, um im Warmbetrieb den Spalt zwischen Kolbenhemd und Zylinderlaufbahn möglichst klein zu halten. Diese beiden Teile werden dann mittels Löten oder Schweißen, vorzugsweise Induktions- oder Reibschweißen, aneinandergefügt.

Alternativ kann ein mehrteiliger Kolben auch dadurch hergestellt werden, dass, wie oben ausgeführt, zwei oder auch mehr Rohlinge etwa durch Reibschweißen aneinander gefügt werden, von denen ein erster Rohling zur Bildung des Kolbenunterteils aus dem erfindungsgemäßen austenitischen Stahl besteht, während der zweite Rohling auch aus einem anderen, beispielsweise einem mikrolegierten Stahl oder einem der oben genannten, bestehen kann. Die so miteinander verbunden Rohlinge können dann beispielsweise durch Schmieden in die Kolbenform gebracht werden.

Der Kolben der in den Fig. 1 und 2 beispielhaft dargestellt ist, kann neben der Brennraummulde 2 auch weitere für den Einsatz erforderliche geometrische Gestaltungen, beispielsweise Kolbennaben, Bolzenbohrung, gegebenenfalls Kühlkanal und dergleichen aufweisen. Diese Gestaltungen können unter Umständen auch schon in den Rohlingen vorgesehen sein. So ist es denkbar, dass der Kolbenrohling zur Bildung des Kolbenunterteils schon zumindest teilweise hohlzylinderförmig gestaltet ist. Wie aus der DE 10 2005 034 306 A1 bekannt, kann hierbei auch ein Rohling aus einem hochtemperaturfesten Stahl zur Bildung einer Bewehrung an der Verbrennungsmulde verwendet werden, der entsprechend durch Schweißen an den Kolbenrohling angefügt wird und durch einen Umformschritt bei der Bildung der Verbrennungsmulde die Bewehrung bildet. Die Rohlinge können je nach Art der nachfolgenden Umformschritte auch unterschiedliche Durchmesser aufweisen.

Der Vorteil der Gestaltung des Kolbenschafts, beziehungsweise Kolbenhemds, mit dem austenitischen Stahl und dem hohen Wärmeausdehnungskoeffizienten im Vergleich zu anderen Kolbenringen liegt darin, dass durch die angepasste Wärmeausdehnung des Kolbenschafts zur Zylinderlaufbahn aus Aluminium eben die Kolbenführung über den gesamten Betriebstemperaturbereich nahezu gleich bleibt und Kolbenkippen und -schlagen vermieden wird.

Der erfindungsgemäß ausgebildete Stahlkolben eignet sich insbesondere zum Einsatz in Aluminiumzylinderkurbelgehäusen, beziehungsweise in Zylinderkurbelgehäusen, deren Laufbahnen durch andere Werkstoffe, etwa eingegossene Zylinderbuchsen oder Verschleißschutzschichten, gebildet sind.

## Patentansprüche

1. Stahlkolben (1) für Verbrennungsmotoren mit Zylinderkurbelgehäusen aus Leichtmetalllegierungen, wobei der Stahlkolben zumindest ein Kolbenoberteil (4) mit einer Verbrennungsmulde (2) und einer Ringwand (3), und ein Kolbenunterteil (4') mit einem Kolbenschaft (5) und einem Pleuellager (6) umfasst,
wobei zumindest der Kolbenschaft (5) des Stahlkolbens aus einem mit Ni, Mn und N stabilisierten austenitischen Stahl besteht, der einen thermischen Ausdehnungskoeffizient in einem Bereich von 16 bis 21 x 10⁻⁶ K⁻¹ aufweist und **dadurch gekennzeichnet, dass** der austenitische Stahl ein Fe-Cr-Ni-Austenit mit einer Zusammensetzung ist, die
- 0,2 bis 0,4 Gew.-% C,
- 8 bis 18 Gew.-% Ni,
- 15 bis 26 Gew.-% Cr,
- 0,5 bis 2 Gew.-% Si,
- bis zu 12 Gew.-% Mn,
- bis zu 2 Gew.-% W,
- bis zu 2 Gew.-% Nb,
- bis zu 2 Gew.-% Al
- 0,05 bis 0,3 Gew.-% N
- unvermeidliche Spuren und
- Fe mit einem Anteil, der einem Differenzanteil zum Erhalt von 100 Gew.-% der Stahllegierung entspricht,
enthält.

2. Stahlkolben (1) nach Anspruch 1,
**dadurch gekennzeichnet, dass**
der Stahlkolben (1) einteilig aus dem austenitischen Stahl hergestellt ist.

3. Stahlkolben (1) nach zumindest einem der Ansprüche 1 bis 2,
**dadurch gekennzeichnet, dass**
der Stahlkolben (1) ein geschmiedeter Stahlkolben ist.

4. Stahlkolben nach Anspruch 1,
**dadurch gekennzeichnet, dass**
der Stahlkolben (1) mehrteilig aufgebaut ist, wobei zumindest das Kolbenoberteil (4) aus einem verschleißfesten legierten Vergütungsstahl besteht, insbesondere aus einem Stahl aus der Gruppe umfassend MoCr4-, 42CrMo4-, CrMo4-, 31CrMoV6- oder 25MoCr4-Stähle.

5. Stahlkolben nach Anspruch 4,
**dadurch gekennzeichnet, dass**
der Stahlkolben (1) aus zumindest zwei Halbzeug-Rohlingen gefügt ist, wobei ein erster Halbzeug-Rohling das Kolbenoberteil (4) und ein zweiter Halbzeug-Rohling zumindest den Kolbenschaft (5) des Kolbenunterteils (4') bereitstellt.

## Claims

1. Steel piston (1) for internal combustion engines with cylinder blocks made of light metal alloys, wherein the steel piston comprises at least a piston crown (4) with a combustion recess (2) and a ring wall (3), and a piston lower part (4') with a piston skirt (5) and a connecting rod bearing (6),
wherein at least the piston skirt (5) of the steel piston is made of an austenitic steel stabilised with Ni, Nm and N and having a coefficient of thermal expansion in a range of 16 to 21 x 10⁻⁶ K⁻¹,
**characterised in that** the austenitic steel is an Fe-Cr-Ni austenite with a composition containing
- 0.2 to 0.4 % by weight of C,
- 8 to 18 % by weight of Ni,
- 15 to 26 % by weight of Cr,
- 0.5 to 2 % by weight of Si,
- up to 12 % by weight of Mn,
- up to 2 % by weight of W,
- up to 2 % by weight of Nb,
- up to 2 % by weight of Al,
- 0.05 to 0.3 % by weight of N,
- unavoidable trace elements and
- Fe in a proportion which corresponds to a differential proportion for obtaining 100 % by weight of the steel alloy.

2. Steel piston (1) according to claim 1,
**characterised in that**
the steel piston (1) is made as a single part of the austenitic steel.

3. Steel piston (1) according to one or more of claims 1 to 2,
**characterised in that**
the steel piston (1) is a forged steel piston.

4. Steel piston (1) according to claim 1,
**characterised in that**
the steel piston (1) is made in several parts, at least the piston crown (4) consisting of a wear-resistant alloyed quenched and tempered steel, in particular of a steel from the group containing MoCr4-, 42CrMo4-, CrMo4-, 31CrMoV6- or 25MoCr4-steels.

5. Steel piston (1) according to claim 4,
**characterised in that**
the steel piston (1) is assembled from at least two semi-finished blanks, a first semi-finished blank providing the piston crown (4) and a second semi-finished blank providing at least the piston skirt (5) of the piston lower part (4').

## Revendications

1. Piston en acier (1) destiné à des moteurs à combustion interne ayant des bloc-moteurs en alliages de métaux légers, le piston en acier comprenant au moins une partie supérieure de piston (4) comportant un bol de combustion (2) et une cloison annulaire (3), et une partie inférieure de piston (4') comportant une tige de piston (5) et un coussinet de bielle (6), au moins la tige de piston (5) du piston en acier se compose d'un acier austénitique stabilisé par Ni, Mn et N, qui présente un coefficient de dilatation thermique se situant dans une plage allant de 16 à 21 x 10⁻⁶ K⁻¹ et **caractérisé en ce que** l'acier austénitique est un austénite de Fe-Cr-Ni doté d'une composition qui se compose de :
- entre 0,2 et 0,4 % en poids de C,
- entre 8 et 18 % en poids de Ni
- entre 15 et 26 % en poids de Cr
- entre 0,5 et 2 % en poids de Si,
- jusqu'à 12 % en poids de Mn,
- jusqu'à 2 en poids de W
- jusqu'à 2 en poids de Nb,
- jusqu'à 2 en poids de Al,
- entre 0,05 et 0,3 % en poids de N
- traces inévitables et
- Fe présentant une proportion qui correspond à une proportion différentielle pour obtenir 100 % en poids de l'alliage d'acier.

2. Piston en acier (1) selon la revendication 1, **caractérisé en ce que** le piston en acier (1) est fabriqué en un seul tenant à partir d'un acier austénitique.

3. Piston en acier (1) selon la revendication 1 et la revendication 2, **caractérisé en ce que** le piston en acier (1) est un piston en acier forgé.

4. Piston en acier selon la revendication 1, **caractérisé en ce que** le piston en acier (1) est conçu en plusieurs parties, au moins la partie supérieure (4) de piston en acier est composé d'un acier de traitement allié et résistant à l'usure, en particulier un acier issu du groupe comprenant les aciers MoCr4, 42CrMo4, CrMo4, 31CrMoV6 ou 25MoCr4.

5. Piston en acier selon la revendication 4, **caractérisé en ce que** le piston en acier (1) est composé d'au moins deux ébauches semi-finies, une première ébauche semi-finie prépare la partie supérieure (4) de piston et une seconde ébauche semi-finie prépare au moins la tige de piston (5) de la partie inférieure (4") de piston.
